# EUROPÄISCHE PATENTSCHRIFT

(11) **EP 0 927 580 B1**
(45) Veröffentlichungstag und Bekanntmachung des Hinweises auf die Patenterteilung: **29.11.2000**
(21) Anmeldenummer: 97122950.5
(22) Anmeldetag: 29.12.1997
(51) Int. Cl.: B05B 1/30, F16K 39/02, E03C 1/06

(54) **Handbrause**
Shower head
Pomme de douche

(43) Veröffentlichungstag der Anmeldung: 07.07.1999
(73) Patentinhaber: eloma GmbH Grossküchentechnik, 82212 Maisach (DE)
(72) Erfinder: Helm, Peter Dipl. Ing., 82216 Maisach (DE)
(74) Vertreter: Strobel, Wolfgang, Dipl.-Ing.

(56) Entgegenhaltungen:
- AU-B- 513 927
- CH-A- 83 561
- DE-C- 804 620
- FR-A- 1 559 095

## Beschreibung

Die vorliegende Erfindung betrifft eine Handbrause nach dem Oberbegriff des Anspruchs 1.

Die Entwicklung der Dusche ist mit der Entwicklung entsprechender Brauseköpfe verbunden. Brauseköpfe dienen dazu, den über eine Flüssigkeitsleitung bzw. einen -schlauch zugeführten Flüssigkeits- insbesondere Wasserstrahl aufzuteilen und über eine Brause, ähnlich einer Gießkanne zu verteilen.

Die ersten Brauseköpfe hatten dementsprechend gießkannenartige Köpfe mit einer Vielzahl von Öffnungen, aus denen feinere Wasserstrahlen hervortreten.

Im Laufe der Entwicklung wurden Brauseköpfe entwickelt, die eine Mehrzahl von unterschiedlichen Wasserspritzformen ermöglichten. So sind Brauseköpfe bekannt, die zwischen einer Mehrzahl von Wasserauslaßzuständen einstellbar sind: einem relativ geraden Schwallstrahl, einer relativ fein dosierten, bis zu einer nebelartigen Verteilung des Wassers durch feine Düsen oder eine Aufteilung des zugeführten Wasserstrahls in wenige gegebenenfalls in Drehung versetzte Wasserstrahlen, die eine massageartige Wirkung auf den Gegenstand ausüben, den sie treffen.

Allen diesen herkömmlichen Brauseköpfen ist gemeinsam, daß der jeweils eingestellte Flüssigkeitsdurchsatz unveränderbar ist und allenfalls über eine Dosierung der Wasserzufuhr an sich, beispielsweise den sanitären Absperrventilen in engen Bereichen veränderbar ist.

Die Einstellmöglichkeiten verschiedener Brausestrahlzustände werden gemäß dem herkömmlichen Stand der Technik durch Drehen des Duschkopfs gegenüber seiner Halterung erzeugt, was erfordert, daß bei Halten des Duschkopfs in einer Hand mit einer zweiten Hand die Einstellung erfolgen muß.

Diese Ausgestaltungen des Standes der Technik weisen den schwerwiegenden Nachteil auf, daß aufgrund von aus dem Wasser entstehenden Ablagerungen, wie beispielsweise Kalkablagerungen, die Bewegungsflächen miteinander verkalken, was zu einer verminderten Einstellbarkeit bis hin zum Verlust der Einstellbarkeit führt.

Weiterhin ergibt sich der Nachteil bei Brauseköpfen des herkömmlichen Standes der Technik, daß eine Dosierung des Flüssigkeitsabgabestrahls maximal stufenweise und in unterschiedlicher Form (ganzer Strahl, feine Brause) erfolgt.

Um eine gewisse Veränderung des Abgabestrahls zu erzeugen, wurde gemäß DE-GM 69 20 617 eine Handbrause vorgeschlagen, die ein den Durchfluß beherrschendes Ventil aufweist, das aus der Schließstellung heraus entgegen eine Belastungsfeder mittels eines außen an der Brause angeordneten Kipphebels anhebbar ist, an dessen kürzerem Ende der im Gehäuse drehbar geführte und aus diesem herausragende Ventilschaft verdrehsicher angelenkt ist.

Der Kipphebel weist zwei gebogene Zapfen auf, die durch Drehung des Kipphebels entlang einer schraubenförmigen Bahn den Kipphebel in Ventilachsenrichtung verschieben, wodurch eine kontinuierliche Veränderung des Flüssigkeitsabgabestrahls erzeugt werden soll.

Abgesehen davon, daß nach Ventilöffnung keinerlei Möglichkeiten vorgesehen werden, den Flüssigkeitsdurchfluß zu beeinflussen, weist die Handbrause gemäß DE-GM 69 20 617 den Nachteil auf, daß nur durch umständliche Handhabung der Handbrauseneinstellung mittels zweier Hände eine Beeinflussung des abzugebenden Flüssigkeitsstrahls erfolgt, so daß eine leichte und effektive Handhabung der Handbrause diese Standes der Technik mit einer Hand nicht möglich ist.

Weiterhin ist aus der DE-PS 804 620 ein Durchgangsventil für Spritzen bekannt, das zwei oder mehr Flüssigkeitskanäle, die außerhalb der Hauptachse liegen, aufweist. Dieses Durchgangsventil für Spritzen weist einen Handhebel auf, der mit Rasten fixiert werden kann. Dadurch ist die Durchflußmenge der Flüssigkeit regulierbar. Diese Ausgestaltung des Standes der Technik hat den Nachteil, daß die Menge der Flüssigkeit, die das Durchgangsventil durchströmt, nicht stufenlos reguliert werden kann. Durch Betätigung des Handhebels, über die Stufen der Rasten, die an der Basis des Handhebels angebracht sind, kann die Flüssigkeitsdurchflußmenge nur grob eingestellt werden. Zur Bedienung dieses Durchgangsventils für Spritzen sind außerdem beide Hände der Bedienungsperson nötig, wobei mit einer Hand der Handhebel betätigt wird, während die andere Hand den erfindungsgemäßen Gegenstand am Handgriff abstützt.

Aus der FR 1 559 095 ist eine Handbrause bzw. ein Brausehahn bekannt, die einen Körper mit einem Flüssigkeitszuführabschnitt und einem Flüssigkeitsabgabeabschnitt aufweist, zwischen denen ein Ventilabschnitt angeordnet ist, der eine Kammer aufweist, wobei ein mit einem Betätigungsabschnitt versehenes und von außen betätigbares Ventilelement vorgesehen ist, das einen Ventilkolben aufweist, der mit einem Ventilsitz zusammenwirkt, und eine Federeinrichtung vorgesehen ist, die das Ventilelement stets in seine Schließstellung gegen den anstehenden Flüssigkeitsdruck beaufschlagt, und sich der Ventilkolben durch Druck, insbesondere Fingerdruck auf den Betätigungsabschnitt aus seiner Schließstellung heraus bewegen läßt, wodurch sich im wesentlichen Druckgleichgewicht in der Ventilkammer einstellt und der Kolben durch Druck in jede beliebige Stellung seines Bewegungsweges durch Überwindung der entgegenstehenden Federkraft der Federeinrichtung verschiebbar ist. Gemäß FR 1 559 095 wird durch Betätigung eines außen angebrachten Handhebels eine runde, dehnbare Gummimembran nach einer Seite deformiert und der Durchfluß von Flüssigkeit ermöglicht. Bei Nachlassen des Drucks auf den Handhebel entspannt sich die Gummimembran, wodurch die Schließstellung des Brausehahnes erreicht wird.

Besonders nachteilig an diesem Gegenstand des Standes der Technik ist die komplizierte Betätigung der Handbrause mittels des Handhebels.

Außerdem erlaubt dieser Brausehahn aufgrund seiner Größe und seines Gewichts keine einfache Handhabung. Er ist damit insbesondere für die Reinigung von Geräten oder Gegenständen mit kompliziertem Aufbau, wie z. B. Küchengeräten, ungeeignet.

Der vorliegenden Erfindung liegt deshalb die Aufgabe zugrunde, eine Handbrause zu schaffen, die einfach handhabbar und vielseitig einsetzbar ist, und zu deren Bedienung kein Hebelarm erforderlich ist.

Diese Aufgabe wird durch die Merkmale des Anspruchs 1 gelöst.

Die vorliegende Erfindung zeichnet sich dadurch aus, daß der Ventilkolben kegelstumpfförmig ausgebildet ist und über eine Kolbenstange mit einem die Gegendruckfläche bildenden Ventillagerteil verbunden ist, und daß die Federeinrichtung auf der einen Seite gegen das Ventillagerteil anschlägt und sich auf der anderen Seite auf einer zwischen dem Ventillagerteil und dem Ventilkolben angeordneten ringförmigen Einschnürung abstützt.

Durch diese erfindungsgemäße Handbrause ist es möglich, unter Ausübung einer geringen Kraft (Kraft des Daumens) die Handbrause derart zu betätigen, daß die Flüssigkeitsabgabe feindosiert eingestellt werden kann, und somit der abgegebene Flüssigkeitsstrahl je nach Anforderung eingestellt werden kann.

Insbesondere wird dabei vorteilhafterweise die leichte einhändige Bedienung der Handbrause verwirklicht, wodurch die erfindungsgemäße Handbrause insbesondere für Reinigungsvorgänge von Gegenständen geeignet ist, da die zweite, freie Hand der Bedienungsperson mit anderen Gerätschaften die Reinigung unterstützen kann oder mit Hilfe der freien Hand die zu reinigenden Gegenstände der Handbrause zuführen kann.

Aufgrund der einerseits einfach konstruktiv aufgebauten Handbrause und der für die Funktion nur wenigen benötigten Teilen ergibt sich weiterhin vorteilhaft nicht nur eine besonders einfache Aufbauweise der Handbrause sondern zudem auch eine besonders einfache und verschleißfeste Konstruktion mit entsprechend großer Betriebssicherheit, insbesondere gegen Verschmutzungen und Verkalkungen, welche bei herkömmlichen Handbrausen zu schweren Nachteilen bis hin zur Funktionsunfähigkeit führen.

Darüber hinaus ergibt sich vorteilhafterweise auch die Möglichkeit einer sehr kleinen Bauweise der Handbrause, mit der Möglichkeit der Ausgabe eines entsprechend fein dosierten kleinen Flüssigkeitsstrahls.

Weitere Vorteile der folgenden Erfindung ergeben sich aus den Unteransprüchen.

Um einerseits die kompakte Bauweise der erfindungsgemäßen Handbrause zu gewährleisten und andererseits die Einfachheit der Funktion der kontinuierlichen Einstellbarkeit des Flüssigkeitsstrahls sicherzustellen ist die erfindungsgemäße Handbrause derart aufgebaut, daß die Achse des Flüssigkeitszuführabschnitts mit der Achse des Flüssigkeitsabgabeabschnitts einen stumpfen Winkel einschließt. Damit wird ein strömungsgünstig vorteilhafter Weg für den Flüssigkeitsstrahl geschaffen, wodurch eine sichere Funktionsweise der Handbrause geschaffen wird.

In einer einfachen Ausführungsform kann die Druckbeaufschlagung direkt auf das Ventillagerelement erfolgen.

In einer bevorzugten Ausführungsform ist an der der von der Federeinrichtung beaufschlagten entgegengesetzten Seite des Ventillagerelements ein Betätigungselement vorgesehen, welches zur Beaufschlagung des entsprechenden Fingers der Betätigungsperson dient.

Vorteilhafterweise weist das Betätigungselement eine konkave Außenseite auf, die für die Auflage eines menschlichen Fingers insbesondere eines Daumens dient. Dies hat den Vorteil, daß aufgrund einer optimalen Anlage des Betätigungsfingers einer vorzeitigen Ermüdung des Fingers soweit wie möglich vorgebeugt wird, so daß auch ein langfristiger Einsatz der Handbrause ermöglicht wird.

Eine besonders robuste, betriebssichere und einfache Ausführungsform der erfindungsgemäßen Handbrause wird vorteilhafterweise dadurch geschaffen, daß der Handbrausekörper aus einem Formteil, bevorzugt einem spritzgegossenen Formteil gebildet ist.

Eine besonders vorteilhafte ergonomische Ausgestaltung der erfindungsgemäßen Handbrause ergibt sich dadurch, daß der Handbrausekörper einen Fingerabstützbereich insbesondere für den Aufbau des Betätigungsdruckes aufweist.

Weitere Einzelheiten, Merkmale und Vorteile der Erfindung ergeben sich aus der nachfolgenden Beschreibung unter Bezugnahme auf die Zeichnung. Darin zeigt:

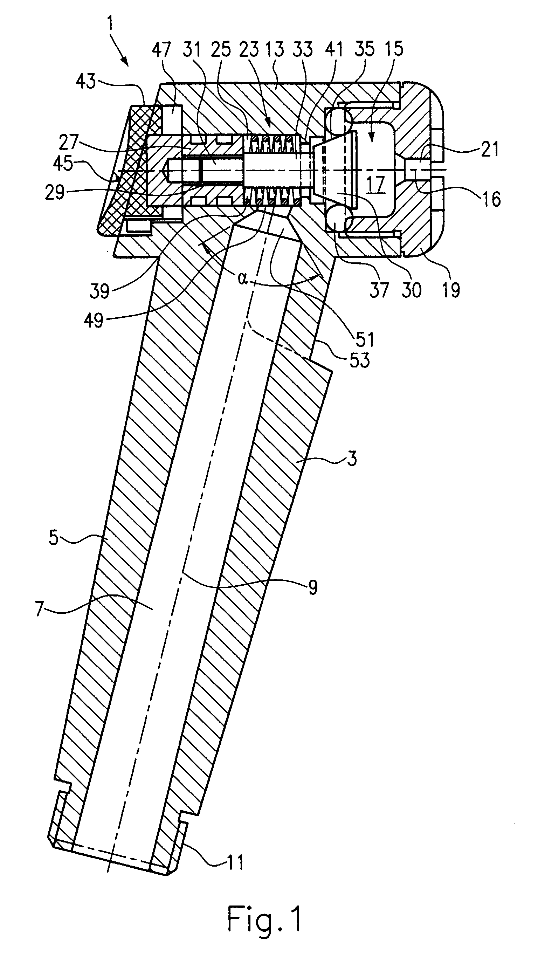

- Figur 1:: eine Schnittansicht der erfindungsgemäßen Handbrause.

Wie aus Figur 1 ersichtlich, weist eine erfindungsgemäße Handbrause 1 einen Handbrausekörper 3 auf, der im Beispielsfalle von Figur 1 in, gegenüber seiner tatsächlichen Ausführungsform, vergrößerter Darstellung dargestellt ist.

Der Handbrausekörper 3 weist einen Schaftabschnitt 5 auf, der als Flüssigkeitszuführabschnitt dient. In diesem Schaftabschnitt 5 ist ein Zuführkanal 7 ausgebildet, der eine Achse 9 aufweist. Am unteren Ende des Handbrausekörpers 3 ist ein Verbindungsabschnitt 11 vorgesehen, der ein Außengewinde aufweist. Dieses Außengewinde dient zur Verbindung mit einer entsprechenden Überwurfmutter eines Flüssigkeitsschlauchansatzes (nicht dargestellt). Derartige Schlauchverbindungen sind genormt.

Der Handbrausekörper 3 weist weiterhin einen Kopfabschnitt 13 auf, in dem ein Flüssigkeitsabgabeabschnitt 15 ausgebildet ist.

Der Flüssigkeitsabgabeabschnitt 15 weist eine Bohrung 17 auf, die sich von dem, im dargestellten Ausführungsbeispiel gemäß Figur 1, rechten Ende des Kopfabschnittes 13 in Richtung des Zuführkanals 7 erstreckt.

In die Bohrung 17 ist ein Brausekopfteil 19 eingesetzt, das im dargestellten Beispielsfalle gemäß Figur 1 eine Durchgangsbohrung 21 aufweist, die den Flüssigkeitsstrahl, der über den Zuführkanal 7 eingeführt wird, wieder abgibt.

Zwischen dem Schaftabschnitt 5 und dem Flüssigkeitsabgabeabschnitt 15 ist ein Ventilabschnitt 23 vorgesehen. Der Ventilabschnitt 23 weist eine Bohrung 25 auf, in die ein Ventillagerteil 27 eingesetzt ist. Das Ventillagerteil 27 weist eine Gewindebohrung 29 auf, in die ein Gewindezapfen 31 einer Kolbenstange 33 eingeschraubt ist. Am anderen Ende der Kolbenstange ist ein Kolben 30 angeordnet, der einem sich von der Kolbenstange 33 in Abgaberichtung der Flüssigkeit vergrößernden Querschnitt aufweist, wodurch der Kolben 30 einen kegelstumpfförmigen Aufbau aufweist.

In Figur 1 ist die Schließstellung der Handbrause dargestellt. Der Kolben 30 liegt an seinem Ventilsitz 35 an, der in Form eines O-Dichtringes 37 ausgebildet ist.

Eine Federeinrichtung 39 ist in dem Ventilabschnitt 23 in der Bohrung 25 vorgesehen, wobei sie sich im wesentlichen entlang der Innenwand der Bohrung 25 erstreckt. Die Federeinrichtung 39 ist im dargestellten Beispielsfall in Form einer Schraubenfeder ausgebildet.

Auf der einen Seite schlägt sie gegen das Ventillagerteil 27 an und stützt sich auf der anderen Seite an einer ringförmigen Einschnürung 41 ab. Diese ringförmige Einschnürung 41 ist im dargestellten Beispielsfalle einstückig mit dem Kopfabschnitt ausgebildet.

Zur Betätigung des Ventils der Handbrause 1 ist ein ergonomisch ausgebildetes, mit einer konkaven Mulde 45 versehenes Betätigungselement 43 vorgesehen, das an dem Ventillagerteil 27 befestigt ist. Es ist in einer Bohrung 47 im Kopfabschnitt 13 des Handbrausekörpers 3 geführt.

Der Zuführkanal 7 mündet unter einem stumpfen Winkel gegenüber dem Flüssigkeitsabgabeabschnitt 15 in dem Ventilabschnitt 23, wobei die Mündungsöffnung 49 in ihrem Durchmesser geringer ist als der Zuführkanal 7. Die Verjüngung wird mittels eines kegelstumpfförmigen Verjüngungsabschnitts 51 erzeugt, dessen Seitenwände sich unter einem Winkel a von im wesentlichen 90° verjüngen.

Nachfolgend wird die Funktionsweise der Handbrause 1 beschrieben.

Im dargestellten Beispielsfalle gemäß Figur 1 befindet sich die Handbrause in ihrer Schließstellung. Der Kolben 30 wird durch die Federeinrichtung 39 in seine Schließstellung gegen seinen Ventilsitz 35 gedrückt. Der O-Ring dichtet zusammen mit der kegelstumpfförmigen Fläche des Kolbens ab.

Durch Druck auf das Betätigungselement 43 wird das Ventillagerteil 27 in Abgaberichtung der Flüssigkeit verschoben, wodurch das Kolbenventil öffnet und Flüssigkeit durch die Durchgangsbohrung 21 nach außen strömt.

Aufgrund der konstruktiven Ausgestaltung ergibt sich bei Öffnen des Ventils ein Druckausgleich in der Bohrung 25, da die Druckfläche am Lagerteil 27 im wesentlichen der Gegendruckfläche an der Einschnürung 41 und der Kolbenfläche des Kolbens 30 gleich ist.

Damit kann das Ventillagerteil 27 leicht durch Druck auf das Betätigungselement 43 gegen die Federkraft der Federeinrichtung 39 verschoben werden, wodurch eine feine Dosierung der Flüssigkeitsabgabemenge erzielbar ist und jede Stellung des Kolbens über seinen gesamten Bewegungsweg von der Benutzungsperson gewählt werden kann.

Durch einfaches Verringern des Betätigungsdruckes auf das Betätigungselement 43 wird mittels der Federeinrichtung 39 der Kolben wieder in Richtung Ventilsitz 35 bewegt, und die Abgabemenge wird entweder verringert oder das Ventil kann wieder geschlossen werden.

Zur weiteren Verbesserung der Handhabung der erfindungsgemäßen Handbrause 1 ist ein weiterer Fingerabstützbereich 53 vorgesehen, der eine absatzförmige Verjüngung des Schaftabschnittes 5 in dessen oberen Abschnitt ist. Wenn beispielsweise der Daumen gegen die konkave Mulde 45 des Betätigungselements 43 drückt bzw. an dieser anliegt, kann der Zeigefinger um den Fingerabstützbereich 53 greifen.

Der Handbrausekörper 3 ist vorzugsweise aus einem Stück hergestellt, das beispielsweise bevorzugt aus einem spritzgegossenen Formteil gebildet ist. Das Brausekopfteil 19 kann auch eine unterschiedliche Ausbildung aufweisen, beispielsweise können mehrere Öffnungen vorgesehen sein, wodurch der Flüssigkeitsabgabestrahl aufgeteilt wird.

Die Wahl des Werkstoffs des Ventillagerteils wird derart vorgenommen, daß ein leichtes Gleiten dieses Teils gegenüber der Innenfläche der Bohrung 25 möglich ist.

Somit wird mit der folgenden Erfindung eine einfache Handbrause geschaffen, die leicht mittels einer Hand betätigbar ist, wobei sie sich insbesondere für die Reinigung von Gegenständen eignet, bei der die zweite Hand der Reinigungsperson für andere Tätigkeiten frei bleiben muß.

Die erfindungsgemäße Handbrause eignet sich insbesondere für den Einsatz beim Reinigen von Küchengeräten, insbesondere Dampfgargeräten.

## Patentansprüche

1. Handbrause (1) mit einem Körper (3) mit einem Flüssigkeitszuführabschnitt (5) und einem Flüssigkeitsabgabeabschnitt (15), zwischen denen ein Ventilabschnitt (23) angeordnet ist, der eine Kammer (25) aufweist, wobei ein mit einem Betätigungsabschnitt oder Betätigungselement (43) versehenes und von außen betätigbares Ventilelement vorgesehen ist, das einen Ventilkolben (30) aufweist, der mit einem Ventilsitz (35) zusammenwirkt, und eine Federeinrichtung (39) vorgesehen ist, die das Ventilelement stets in seine Schließstellung gegen den anstehenden Flüssigkeitsdruck beaufschlagt, und sich der Ventilkolben (30) durch Druck, insbesondere Fingerdruck auf den Betätigungsabschnitt (43) aus seiner Schließstellung heraus bewegen läßt, wodurch sich im wesentlichen Druckgleichgewicht in der Ventilkammer einstellt und der Kolben (30) durch Fingerdruck in jede beliebige Stellung seines Bewegungsweges durch Überwindung der entgegenstehenden Federkraft der Federeinrichtung (39) verschiebbar ist,
dadurch gekennzeichnet,
daß der Ventilkolben (30) kegelstumpfförmig ausgebildet ist und über eine Verbindungs- bzw. Kolbenstange (33) mit einem die Gegendruckfläche bildenden Ventillagerteil (27) verbunden ist, und daß die Federeinrichtung (39) auf der einen Seite gegen das Ventillagerteil (27) anschlägt und sich auf der anderen Seite auf einer zwischen dem Ventillagerteil (27) und dem Ventilkolben (30) angeordneten ringförmigen Einschnürung des körpers abstützt.

2. Handbrause nach Anspruch 1, dadurch gekennzeichnet, daß die Achse (9) des Flüssigkeitszuführabschnitts (5) mit der Achse (16) des Flüssigkeitsabgabeabschnitts (15) einen stumpfen Winkel einschließt.

3. Handbrause nach Anspruch 1 oder 2, dadurch gekennzeichnet, daß an der der von der Federeinrichtung (39) beaufschlagten Seite entgegengesetzten Seite des Ventillagerteils (27) ein Betätigungselement (43) vorgesehen ist.

4. Handbrause nach Anspruch 3, dadurch gekennzeichnet, daß das Betätigungselement (43) eine konkave Außenseite (konkave Mulde 45) aufweist, die zur Auflage eines menschlichen Fingers, insbesondere eines Daumens, dient.

5. Handbrause nach einem der Ansprüche 1 bis 4, dadurch gekennzeichnet, daß der Handbrausekörper (3) aus einem spritzgegossenen Formteil, bevorzugt einstückig, ausgebildet ist.

6. Handbrause nach einem der Ansprüche 1 bis 5, dadurch gekennzeichnet, daß der Handbrausekörper (3) einen Fingerabstützbereich (53), insbesondere für den Aufbau des Betätigungsdruckes, aufweist.

## Claims

1. Hand sprayer (1) comprising a body (3) having a liquid supply portion (5) and a liquid release portion (15), a valve portion (23) being positioned therebetween, said valve portion (23) comprising a valve chamber (25), wherein a valve element which has an operating portion or operating element (43) and can be operated from outside is provided for, said valve element comprising a valve piston (30) coacting with a valve seat (35), and wherein spring means (39) are provided for, said spring means (39) impinging the valve element always in its closed position against the pressure of liquid occurring, and wherein the valve piston (30) can be moved out of its closed position by means of pressure, in particular finger pressure, on the operating element (43), this substantially leading to a balance of pressure in the valve chamber and to the piston (30) to be shiftable by finger pressure to any desired position of its path of movement by overcoming the objecting spring force of the spring means (39),
characterized in
that said valve piston (30) is of truncated cone shape and is linked to a valve bearing element (27) forming a counterpressure surface by means of a connecting rod (33), and that said spring means (39) on one side are supported by said valve bearing element (27) and on the other side by an annular contraction (41) of the body (3) formed between said valve bearing element (27) and said valve piston (30).

2. Hand sprayer according to claim 1, characterized in that the axis (9) of said liquid supply portion (5) forms an obtuse angle with the axis (16) of said liquid release portion (15).

3. Hand sprayer according to claim 1 or 2, characterized in that said operating element (43) is provided for at the side of said valve bearing element (27) opposite to the side impinged by said spring means (39).

4. Hand sprayer according to claim 3, characterized in that said operating element (43) comprises a concave outside or concave hollow (45) for a human finger, in particular a thumb, to be put upon.

5. Hand sprayer according to one of claims 1 to 4, characterized in that said hand sprayer body (3) is formed of an injection-moulded formed part, preferably one-piece.

6. Hand sprayer according to one of claims 1 to 5, characterized in that said hand sprayer body (3) comprises a finger prop-up portion (53) in particular for building up the operating pressure.

## Revendications

1. Pomme de douche à main (1) comprenant un corps (3) comportant une section d'acheminement de liquide (5) et une section de projection de liquide (15) entre lesquelles est disposée une section de valve (23) qui comporte une chambre (25), tandis qu'il est prévu un élément de valve qui est pourvu d'une section d'actionnement ou d'un élément d'actionnement (43) et peut être actionné de l'extérieur et qui comprend un piston de valve (30) coopérant avec un siège de valve (35), et qu'il est prévu un dispositif de ressort (39) qui applique constamment l'élément de valve dans sa position de fermeture à l'encontre de la pression de liquide régnante, le piston de valve (30) pouvant être déplacé à partir de sa position de fermeture au moyen d'une pression, notamment de la pression d'un doigt sur la section d'actionnement (43), de sorte qu'il s'établit essentiellement un équilibre de pression dans la chambre de valve et que le piston (30) peut être déplacé au moyen de la pression d'un doigt dans toute position voulue de sa course de déplacement en vainquant la force élastique du dispositif de ressort (39) qui s'y oppose, caractérisée en ce que le piston de valve (30) est réalisé en forme de tronc de cône et est relié par l'intermédiaire d'une tige de liaison ou tige de piston (33) à une pièce formant portée de valve (27) formant la surface de contre-pression et en ce que le dispositif de ressort (39) vient en butée d'un côté sur la pièce formant portée de valve (27) et prend appui de l'autre côté sur un rétrécissement annulaire du corps qui est situé entre la pièce formant portée de valve (27) et le piston de valve (30).

2. Pomme de douche à main suivant la revendication 1, caractérisée en ce que l'axe (9) de la section d'acheminement de liquide (5) fait un angle obtus avec l'axe (16) de la section de projection de liquide (15).

3. Pomme de douche à main suivant la revendication 1 ou 2, caractérisée en ce qu'un élément d'actionnement (43) est prévu sur le côté de la pièce formant portée de valve (27) qui est situé à l'opposé du côté soumis à l'action du dispositif de ressort (39).

4. Pomme de douche à main suivant la revendication 3, caractérisée en ce que l'élément d'actionnement (43) comporte un côté extérieur concave (creux concave 45) qui sert à l'appui d'un doigt d'homme, notamment d'un pouce.

5. Pomme de douche à main suivant l'une des revendications 1 à 4, caractérisée en ce que le corps de pomme de douche à main (3) est formé, de préférence d'un seul tenant, à partir d'une pièce de forme moulée par coulée.

6. Pomme de douche à main suivant l'une des revendications 1 à 5, caractérisée en ce que le corps de pomme de douche à main (3) comporte une zone d'appui de doigt (53), notamment pour l'établissement de la pression d'actionnement.
